# EUROPEAN PATENT APPLICATION

(11) **EP 2 842 708 A1**
(43) Date of publication of application: **04.03.2015**
(21) Application number: 14182062.1
(22) Date of filing: 25.08.2014
(51) Int. Cl.: B28B 5/04, B28B 11/24, B28B 17/00, B65G 57/30

(54) **Method, lifting and stacking apparatus and circulation line casting apparatus for casting concrete products**

(30) Priority: 02.09.2013 FI 20135879
(71) Applicant: Elematic Oy Ab, 37801 Toijala (FI)
(72) Inventor: Eilola, Jani, FI-37560 Lempäälä (FI)
(74) Representative: Berggren Oy Ab

(57) **Abstract**

A method for casting prefabricated concrete products with a circulation line casting process, where casting molds (4a-4e) with fresh cast concrete products are moved for curing in a curing area, where the casting molds (4a-4e) with the concrete products are stacked to form stacks (4) of plurality of casting molds (4a-4e) in the curing area, wherein the stacks (4) of casting molds (4a-4e) in the curing area are formed by lifting the casting molds (4a-4e) forming the stack from the lowest casting mold of the stack, inserting a new casting mold below the lifted stack, and lowering the lifted stack on top of the inserted new casting mold. The invention also relates to a lifting and stacking apparatus (1) utilizing the method, and to a circulation line casting apparatus equipped with such a lifting and stacking apparatus (1).

## Description

The present invention relates to casting of prefabricated concrete products with a circulating line casting process. More precisely the present invention relates to a method and equipment for curing the prefabricated products cast with the circulating line casting process.

Circulating line casting process is a casting process where the casting molds are mounted on tracks and circulate through the phases of the casting process, after which the casting molds are returned for a new cycle.

The circulating line is formed of a plurality work stations between which the casting mold is transferred in different stages of the casting process. In the first stage of the circulation line the mold bed, which normally is a casting table, is cleaned. In next stage the mold bed is furnished with fixed and detachable mold sidewalls to form the casting mold in the mold bed and other required equipment, such as reinforcements etc., are set on the mold. After the furnishing stage casting of the concrete mass to the mold is carried out, together with required vibrating actions during the casting. The casting of concrete mass into the mold can be carried out in different stages if for example different layers need to be added to the product to be cast such as insulation layers in cases of insulated wall elements. When casting of concrete mass to the mold is done, the upper surface of the product to be cast is leveled and other required surface treatment steps are carried out. Next the mold together with the fresh cast product is moved to curing stage, which generally takes place at a curing chamber where temperature during the curing can be monitored and adjusted if required. When the cast product is cured, the mold is taken to demolding, where the cast product is removed from the mold generally together with tilting of the mold and the mold sidewalls are removed from the mold bed. After this stage the mold is ready for new cleaning stage and for the process of casting a new product.

In the curing stage the molds with cast products are generally located in columns of several molds on top of each other so that the area required by curing the products can be minimized. This may be implemented with a separate support structure where each mold is supported by the support structure when located in the curing area. Alternatively the molds may have legs where the legs of the mold are set on a mold entity located below it to form stacks so that molds can be stacked in the curing area. Further, the curing area is advantageously enclosed that the heat released for the concrete during the curing process can be used for speeding up the curing process.

The stacking of the molds together with cast products are carried out with lifting equipment that is either located inside the curing chamber or has access to the curing chamber. Separate lifting equipment used in the stacking of the molds in the curing chamber is often expensive, which increases the cost of the circulation line. Alternative normal lifting cranes moving along the ceiling of the manufacturing hall may be used, but this solution makes the enclosing of the curing area almost impossible and thus it is not possible with curing chambers. The use of lifting cranes of the manufacturing hall creates also problems for work safety.

The present invention provides a cost efficient and mechanically simple solution for stacking molds together with products in the curing chamber. The solution of the present invention is also more readily automatized, as a part of automatized production system, for example.

In the present invention movable casting molds of a circulation line casting process together with fresh cast concrete products are moved for curing in a curing area, such as a curing chamber for example, where the casting molds with the concrete products are stacked to form stacks of plurality of casting molds in the curing area, wherein the stacks of casting molds in the curing area are formed by lifting the casting molds forming the stack from the lowest casting mold of the stack, inserting a new casting mold below the lifted stack, and lowering the lifted stack on top of the inserted new casting mold.

Advantageously the lifting of the stack is implemented with a movable lifting equipment movable below the stacks of molds, and preferably the lifting of the stack is implemented by pushing the lowest casting mold of the stack upwards.

Advantageously the lifting equipment is connected to the lowest casting mold of the stack to be lifted through adjustable protrusions in the lifting equipment and/or in the casting mold. This can be implemented with a horizontally adjustable bolts or pins, for example located on top of the lifting means of the lifting equipment or protruding from the side surfaces of the lifting means so that with horizontal movement of the bolts or pins the lifting equipment may be connected to and disconnected from the casting mold to be lifted. Alternatively the casting molds may be equipped with lifting surfaces, which may be moved to a lifting position for before lifting the stack. Further, the lifting surfaces may also be moved away from the lifting position after the lifting is done.

Advantageously the lifting equipment of the invention comprises one or more jacks for lifting the stack. The lifting equipment is also advantageously located completely inside a curing chamber of a circulation line casting apparatus.

In the present invention the lifting and stacking equipment is advantageously operated with hydraulic power and the lifting elements comprise hydraulic cylinders for providing the required power for lifting the molds and mold stacks. This type of hydraulic system can then be equipped with one or more hydraulic accumulators, where hydraulic pressure may be stored when molds are lowered, and this stored hydraulic pressure can then be at least partially utilized for the lifting of the molds.

The features defining a method according to the present invention are more precisely presented in claim 1, the features defining a lifting and stacking apparatus according to the present invention are more precisely presented in claim 5, and the features defining a circulation line casting apparatus according to the present invention are more precisely presented in claim 11. Dependent claims disclose advantageous embodiments and features of the invention.

Exemplifying embodiment of the invention and its advantages are explained in greater detail below in the sense of example and with reference to accompanying drawings, where
Figures 1A-1D shows schematically a lifting and stacking apparatus according to an embodiment of the present invention in different positions of stacking procedure,
Figure 2 shows schematically an lifting connection between a mold and a lifting and stacking apparatus according to an embodiment of the present invention, and
Figure 3 shows schematically a top view of an embodiment of a mold used in the present invention.

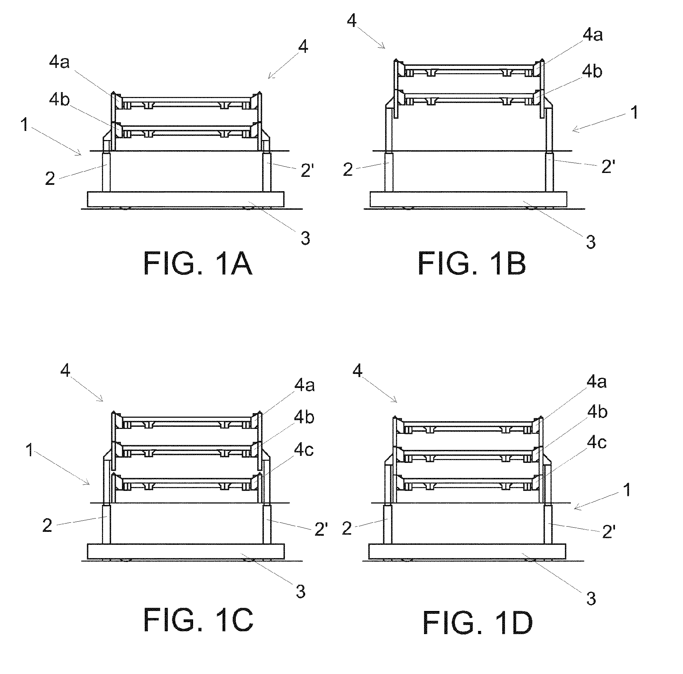

In figures 1A-1D is shown schematically an embodiment of a lifting and stacking apparatus 1 of the invention in different lifting and stacking positions. The lifting and stacking apparatus 1 comprises two vertically adjustable lifting elements 2, 2', which are connected from their lower ends to a base unit 3, which base unit is movable in transversal direction in respect of the length of the mold stacks 4. When mold stacks 4 are lifted, the lifting is carried out with two lifting and stacking apparatuses 1 located in different positions on the length of the mold stacks.

Figure 1A shows situation where the mold stack 4 formed of two molds 4a and 4b, with concrete products located within, are to be lifted and the lifting and stacking apparatus 1 is located in a lifting position. In the lifting position the upper ends of the lifting elements 2, 2' are in contact to the lowest mold 4b of the mold stack 4 in a suitable way so that the stack can be lifted with vertical motion to upwards. This connection between the mold 4b and the upper ends of the lifting elements 2, 2' may be implemented with a protrusion(s) located on the side of the mold providing suitable lifting surface for the upper ends of the lifting elements, or the upper ends of the lifting elements may be equipped with sideways extending protrusions that fit in corresponding openings or holes in the mold, for example.

Figure 1B shows the situation when the lifting of the mold stack 4 is carried out with the lifting and stacking apparatus 1 by the vertical upward motion of the lifting elements 2, 2'.

Next, as shown in figure 1C a new mold 4c with a fresh cast concrete product is moved below the lifted stack 4 with suitable transferring means.

After the new mold 4c is properly located below the lifted stack 4, the stack is lowered on top of the new mold 4c as shown in figure 1D.

After the lifting and stacking procedure, the lifting and stacking apparatus 1 may be transferred below another stack for a new lifting process. For this transfer process the lifting elements 2, 2' are moved below the support level of the mold stacks 4 by vertical downwards movement or the lifting elements may be pivoted in relation to the base unit 3, for example.

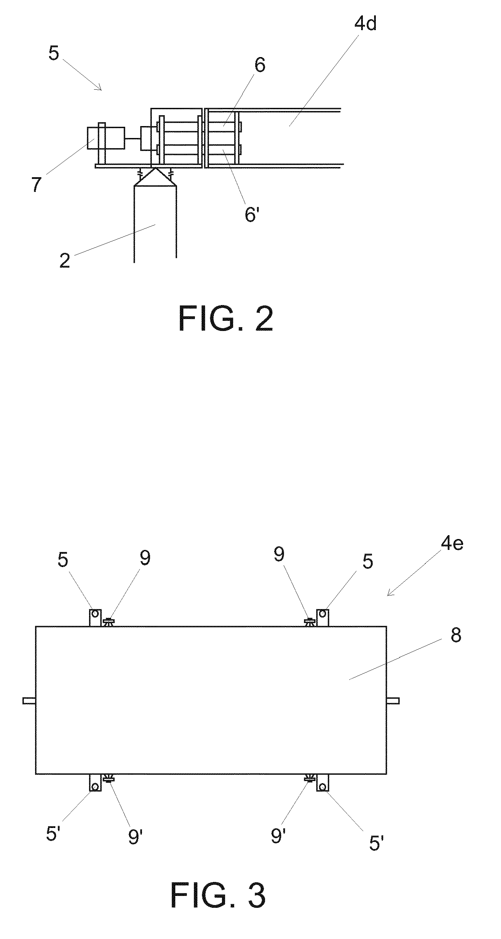

Figure 2 shows schematically one embodiment for a lifting connection between a mold 4d and an upper end of a lifting element 2 of a lifting and stacking apparatus according to the present invention.

In this embodiment on top of the lifting element 2 is added a connection piece 5, which comprises two horizontally movable bolts 6, 6', which bolts are moved in horizontal direction with a linear actuator 7 such as a hydraulic cylinder for example.

In the situation of figure 2, in which the lifting element is connected to the mold 4b for lifting the mold, the bolts 6, 6' are moved to their outward position, in which position the bolts are located partially inside the structure of the mold 4d, through suitable holes formed in the structure of the mold, for example.

The connection piece 5 is connected to the structure of the mold 4d through the bolts 6, 6' so that this connection provides suitable support for raising and lowering the mold, or stack of molds on top of the mold 4d.

The connection between the connection piece 5 and the top end of the lifting element 2, however, is implemented so, that in principle only vertical forces are carried by the lifting element, and the connection does not transfer torque to the lifting element.

After the stacking operation of molds, the connection piece 5 is detached from the structure of the mold 4d by withdrawing the bolts 6, 6' within the connection piece with the linear actuator 7, and lifting element 2 is lowered to its transfer position below the molds.

In relation to the embodiments discussed above it is to be noted that other type of connections between the lifting elements of lifting and stacking apparatus are also possible. For example suitable bar or beam connecting the lifting elements located on both sides of the mold and extending below the mold is one advantageous embodiment for providing suitable lifting points for the lifting and stacking apparatus. These bars or beams may be part of the mold or, alternatively, part of the lifting elements of the lifting and stacking apparatus.

Figure 3 shows a top view of an embodiment of a mold 4e used in the present invention. The mold 4e comprises mold surface 8, connection pieces 5, 5', and mold legs 9, 9'.

From figure 3 the proper placement of the connection pieces 5, 5' in relation to the mold 4e and the mold legs 9, 9' can be seen. Advantageously the connection points for connection pieces 5, 5' are located near the mold legs 9, 9' so that the same support structure of the mold for the mold legs may be used for providing suitable support structure for the connection points of the connection pieces 5, 5' of the lifting elements. The connection pieces 5, 5' also need to be large enough so that the lifting elements of the lifting and stacking apparatus can be moved freely and safe distance away from the mold legs 9, 9'.

In the present invention the lifting and stacking apparatus is advantageously operated with hydraulic power and the lifting elements comprise hydraulic cylinders for providing the required power for lifting the molds and mold stacks. This type of hydraulic system can then be equipped with one or more hydraulic accumulators, where hydraulic pressure may be stored when molds are lowered, and this stored hydraulic pressure can then be at least partially utilized for the lifting of the molds.

The specific exemplifying embodiment of the invention shown in figures and discussed above should not be construed as limiting. A person skilled in the art can amend and modify the embodiment of the invention described above in many evident ways within scope of attached claims. Thus the invention is not limited merely to the embodiments described above.

## Claims

1. A method for casting prefabricated concrete products with a circulation line casting process, where casting molds (4a-4e) with fresh cast concrete products are moved for curing in a curing area, where the casting molds with the concrete products are stacked to form stacks (4) of plurality of casting molds in the curing area, **characterized in that** the stacks (4) of casting molds (4a-4e) in the curing area are formed by lifting the casting molds forming the stack from the lowest casting mold of the stack, inserting a new casting mold below the lifted stack, and lowering the lifted stack on top of the inserted new casting mold.

2. A method according to claim 1, wherein the lifting of the stack (4) is implemented with a movable lifting equipment (1) movable below the stacks.

3. A method according to claim 1 or 2, wherein the lifting of stack (4) is implemented by pushing the lowest casting mold of the stack upwards.

4. A method according to claim 2 or 3, wherein the lifting equipment (1) is connected to the lowest casting mold of the stack (4) to be lifted through protrusions (6, 6') in the lifting equipment adjustable towards and away from the mold and/or through movable protrusions or surfaces in the casting mold.

5. A lifting and stacking apparatus (1) for circulation line casting process of prefabricated concrete products, which apparatus comprises means for lifting and stacking molds with cast concrete products, **characterized in that** the means for lifting and stacking the molds comprises means (2) for lifting a stack of molds (4) upwards, and means for moving a mold to be added to the stack below the lifted stack.

6. A lifting and stacking apparatus (1) according to claim 5, wherein the means (2) for lifting and stacking molds is implemented with lifting equipment located below the stack (4) to be lifted.

7. A lifting and stacking apparatus (1) according to claim 6, wherein the lifting equipment comprises one or more jacks (2) for lifting the stack (4).

8. A lifting and stacking apparatus (1) according to claim 6 or 7, wherein the lifting equipment is movable below plurality of mold stacks (4).

9. A lifting and stacking apparatus (1) according to any of claims 5-8, wherein the means (2) for lifting a stack (4) of molds upwards comprises protrusions (6, 6') adjustable towards and away from a mold to connect and disconnect the means to and from the mold.

10. A lifting and stacking apparatus (1) according any of claims 5-9, wherein the apparatus is located within a curing chamber of a circulation line casting process.

11. A circulation line casting apparatus for casting prefabricated concrete products, which apparatus comprises a lifting and stacking apparatus (1) according to any of claims 5-10.
